# FASCICULE DE BREVET EUROPEEN

(11) **EP 3 550 096 B1**
(45) Date de publication et mention de la délivrance du brevet: **05.05.2021**
(21) Numéro de dépôt: 19164563.9
(22) Date de dépôt: 22.03.2019
(51) Int. Cl.: E04H 13/00

(54) **MONUMENT MORTUAIRE COMPORTANT UNE BORNE DE PRESENTATION, DE RECUEIL ET D'ECHANGE D'INFORMATIONS**
GRABDENKMAL, DAS EINE SÄULE ZUR PRÄSENTATION, ZUM SAMMELN UND AUSTAUSCH VON INFORMATIONEN UMFASST
HEADSTONE COMPRISING A TERMINAL FOR PRESENTATION, COLLECTION AND EXCHANGE OF INFORMATION

(30) Priorité: 23.03.2018 FR 1852513
(43) Date de publication de la demande: 09.10.2019
(73) Titulaire: Allied Century International Ltd., Kowloon (HK)
(72) Inventeur: COLLEAU, Jacques, 78250 Meulan-en-Yvelines (FR)
(74) Mandataire: Ex Materia

(56) Documents cités:
- DE-A1- 3 718 056
- FR-A1- 2 818 999
- US-A- 5 404 343
- US-A1- 2004 085 337
- US-A1- 2009 077 779
- US-B1- 6 980 107

## Description

L'invention concerne les monuments mortuaires, qu'ils consistent par exemple en des monuments funéraires ou des monuments cinéraires, et elle concerne plus particulièrement des monuments de ce type comportant une borne de présentation, de recueil et d'échange d'informations. Le document US 2004/085337 A1 décrit un tel monument.

Les monuments mortuaires comportent classiquement une pierre tombale de surface, appelée tombale, plus ou moins longue et venant recouvrir :
- une fosse dans laquelle est inhumé le corps du défunt, être humain ou animal de compagnie, s'il s'agit d'un monument funéraire,
- une petite cavité dans laquelle sont placées les cendres du défunt, s'il s'agit d'un monument cinéraire.

Les proches du défunt sont amenés à se recueillir sur la tombale et peuvent témoigner leur attention au défunt en déposant des fleurs, une plaque funéraire ou encore une photo du défunt. Dans ce contexte, il est difficile pour un proche, et pour toute autre personne s'inclinant sur le monument mortuaire, de savoir qui a pu rendre précédemment hommage à l'être défunt et laisser à celui-ci un témoignage d'attention.

En outre, les objets déposés sur les tombales sont, comme on l'a vu, à peu près toujours les mêmes, alors que les proches ont gardé des souvenirs différents du défunt, autant que partagé des moments particuliers avec lui.

Les personnes venant s'incliner sur la dépouille ou les cendres d'un être défunt peuvent être désireuses de conserver sur le site funéraire leurs hommages rendus au défunt de manière audiovisuelle, et partager ceux-ci, autant que des moments vécus particuliers avec le défunt, avec d'autres individus venant se recueillir sur la même tombale.

L'invention s'inscrit dans ce double contexte et vise à proposer une solution alternative aux monuments funéraires existants, en permettant à toute personne, s'inclinant sur la tombale d'un être défunt, de laisser une trace personnalisée de son passage, de partager si elle le souhaite ce moment de recueillement qui lui est propre avec d'autres personnes venant faire de même mais également des moments vécus avec l'être cher du temps du vivant de ce dernier.

L'invention vise ainsi à rompre avec la monotonie engendrée par les visites dans les lieux funéraires et la perte de fréquentation qui en résulte, dans de nombreux pays occidentaux notamment.

Selon l'invention, un monument mortuaire comporte les caractéristiques selon la revendication 1 ci-jointe.

Le monument mortuaire présente ainsi une borne interactive en ce qu'il est ainsi possible selon l'invention de consulter ou laisser un hommage à l'être défunt par l'intermédiaire de la borne de présentation, de recueil et d'échange d'informations qui peut être fixée sur ou encastrée dans le monument mortuaire.

Le monument mortuaire selon l'invention se distingue ainsi des arts antérieurs connus en ce que la borne associée à la tombale permet un recueil, via des moyens d'enregistrement appropriés, et un échange d'informations, les personnes visitant a tombale d'un être défunt pouvant par exemple prendre connaissance des hommages dernièrement enregistrés et le cas échéant réagir à ces hommages.

Selon une caractéristique de l'invention, les moyens d'acquisition de données audiovisuelles comportent une caméra permettant l'acquisition d'images et un microphone formant enceinte.

Selon une caractéristique de l'invention, la caméra est une caméra avant de l'interface de communication. Plus particulièrement, l'interface de communication est une tablette tactile et la caméra est la caméra avant de cette interface tactile.

Selon une caractéristique de l'invention, l'application de l'interface de communication est configurée pour stocker les informations recueillies dans un ordre chronologique et pour les présenter via l'interface de communication en fonction du résultat d'une requête d'identification enregistrée via l'interface de communication ou les moyens d'acquisition de données audiovisuelles. La requête d'identification peut notamment consister en un code d'accès à renseigner par l'utilisateur.

Selon différentes caractéristiques, prises seules ou en combinaison, relatives à un mode de réalisation selon lequel la borne de présentation, de recueil et d'échange est encastrée dans le monument mortuaire, on pourra prévoir que, selon l'invention :
- le monument mortuaire comporte un logement ménagé dans la tombale pour la réception de la borne de présentation, de recueil et d'échange d'informations ;
- la borne de présentation, de recueil et d'échange d'informations est escamotée partiellement dans le logement ;
- une lumière est ménagée traversante dans la tombale pour former le logement, la borne de présentation, de recueil et d'échange d'informations étant configurée pour traverser ladite lumière ;
- le monument mortuaire comporte un support de fixation de la borne de présentation, de recueil et d'échange d'informations, ledit support de fixation étant configuré pour coopérer avec la paroi de fond ou la paroi latérale de la borne de présentation, de recueil et d'échange d'informations et avec une face inférieure de la tombale ; le support de fixation peut notamment être configuré de sorte que la coopération du support de fixation et de la paroi de fond peut être opérée dans la zone du logement tandis que le support de fixation est ménagé sous la tombale en dehors de la zone du logement.

Dans un autre mode de réalisation, la borne de présentation, de recueil et d'échange d'informations est rendue solidaire de la tombale de sorte que la paroi de fond de la borne repose contre une face supérieure de la tombale. Notamment, il est possible ainsi que la borne soit disposée sur une tombale dans laquelle aucun logement n'est formé.

La borne de présentation, de recueil et d'échange d'informations peut être fixée sur cette face supérieure de la tombale par l'intermédiaire de tiges filetées partiellement noyées dans l'épaisseur de la tombale.

Selon une caractéristique de l'invention, l'interface de communication est une interface tactile ou à commande vocale.

La face frontale de la borne de présentation, de recueil et d'échange d'informations peut s'étendre dans un plan présentant une inclinaison, par rapport à l'horizontale, d'angle compris entre 10° et 80° ; il convient de comprendre que cette inclinaison sera choisie pour permettre une visibilité optimale des informations présentées sur la borne par les usagers, et qu'elle peut notamment varier en fonction de la hauteur à laquelle est disposée la borne ;

Selon des caractéristiques de l'invention, la borne de présentation, de recueil et d'échange d'informations comprend au moins un thermostat et au moins un dispositif de traitement thermique pour moduler la température interne à la borne :
- le « au moins un dispositif de traitement thermique » peut être un ventilateur, agencé contre une face arrière de la borne de présentation, de recueil et d'échange d'informations, à l'opposé de la face frontale comportant l'interface de communication ;
- le « au moins un dispositif de traitement thermique » peut être un coussinet chauffant, plaqué contre l'interface de communication ;

La borne de présentation, de recueil et d'échange d'informations selon un aspect de l'invention comprend au moins un thermostat de mesure de la température ambiante et de coupure de l'alimentation électrique d'au moins l'interface de communication, et le cas échéant de l'alimentation électrique du microphone haut-parleur et des ports USB, lorsque la température ambiante descend en dessous d'un seuil déterminé.

Selon une caractéristique de l'invention, le monument mortuaire comporte au moins un panneau solaire pour la recharge électrique de composants disposés dans la borne de présentation, de recueil et d'échange d'informations :
- le « au moins un panneau solaire » est agencé au voisinage de la borne de présentation, de recueil et d'échange d'informations ;
- le « au moins un panneau solaire » est agencé sur la face supérieure de la tombale.

Un monument mortuaire selon l'invention peut consister en un monument funéraire ou cinéraire comportant la tombale et une stèle sensiblement perpendiculaire agencée à une extrémité de la tombale. Dans ce cas, il est envisageable que le « au moins un panneau solaire » soit agencé au voisinage de l'extrémité de la tombale à l'opposé de la stèle. Avantageusement, la borne de présentation, de recueil et d'échange d'informations peut être disposée au plus proche de cette extrémité de la tombale à l'opposé de la stèle, et le « au moins un panneau solaire » peut être disposée entre la stèle et la borne. Il peut également être prévu que deux panneaux solaires soient disposés latéralement de part et d'autre de la borne.

Dans le cas d'application d'une borne de présentation, de recueil et d'échange d'informations à un monument mortuaire sans stèle, il convient de comprendre que le « au moins un panneau solaire » est agencé au voisinage de l'extrémité de la tombale destinée à être la plus proche des individus amenés à s'incliner sur la tombale. Avantageusement, la borne de présentation, de recueil et d'échange d'informations peut être disposée au plus proche de cette extrémité de la tombale, et le « au moins un panneau solaire » peut être disposée en retrait de la borne. Là encore, il peut être prévu que deux panneaux solaires soient disposés latéralement de part et d'autre de la borne.

D'autres caractéristiques et avantages de la présente invention apparaitront plus clairement à l'aide de la description et des figures parmi lesquels :

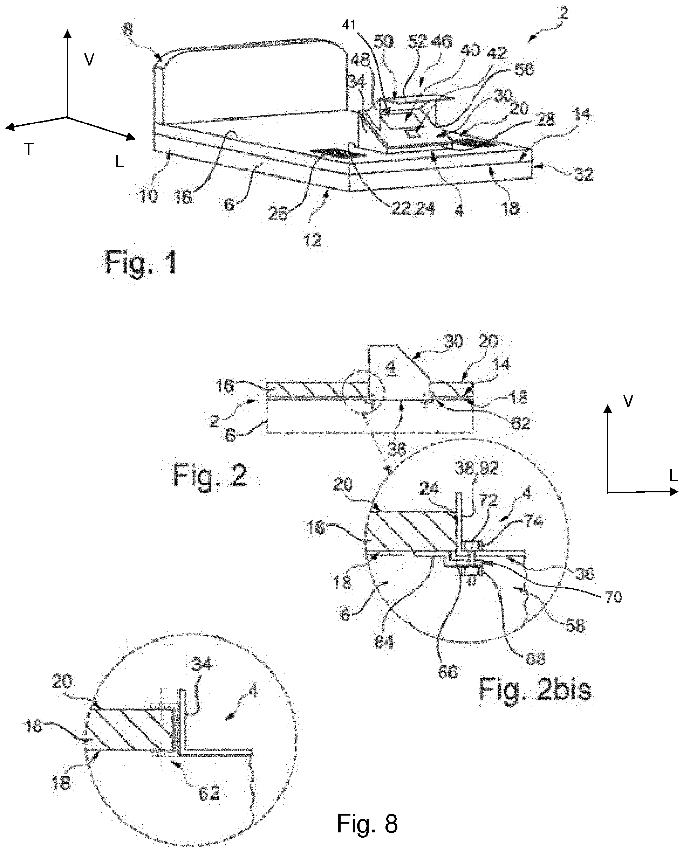

- la figure 1 est une représentation schématique illustrant en perspective un monument mortuaire selon l'invention, ici un monument funéraire, rendant visible en saillie de la tombale une borne de présentation, de recueil et d'échange d'informations, équipée notamment d'une interface tactile et d'un microphone haut-parleur, et deux panneaux solaires disposés de part et d'autre de la borne ;
- la figure 2 est une vue partielle, en coupe longitudinale, du monument mortuaire de la figure 1, dans laquelle on a rendu visible un premier mode de réalisation d'un moyen de fixation de la borne de présentation, de recueil et d'échange d'informations sur la tombale ;
- la figure 2bis est une vue d'un détail de la figure 2, rendant particulièrement visible un mode de réalisation du moyen de fixation ;
- la figure 3 est une représentation schématique, en coupe, d'un ensemble formé par la borne de présentation, de recueil et d'échange d'informations et un panneau solaire,
- la figure 4 est une vue en perspective de la borne de présentation, de recueil et d'échange d'informations, selon un angle de vue rendant visible la face arrière de la borne interactive,
- la figure 5 est une vue de dessous de la borne de présentation, de recueil et d'échange d'informations illustrée sur les figures 3 et 4,
- la figure 6 est une représentation schématique éclatée des différents composants destinés à être disposés dans la borne interactive devant équiper le monument mortuaire selon l'invention,
- les figures 7 et 7 bis sont des vues similaires à celles des figures 2 et 2bis pour illustrer un deuxième mode de réalisation de l'invention,
- et la figure 8 est une représentation schématique d'une variante du premier mode de réalisation.

Il faut tout d'abord noter que, si les figures exposent l'invention de manière détaillée pour sa mise en œuvre, elles peuvent bien entendu servir à mieux définir l'invention le cas échéant. Toutefois, ces figures n'exposent qu'une partie des exemples de réalisation possibles selon l'invention.

Dans la description qui va suivre, on se référera à une orientation en fonction des axes longitudinaux L, verticaux V et transversaux T, tels qu'ils sont définis par le trièdre L,V,T représenté sur les figures. Il est à noter que le choix des appellations de ces axes n'est pas limitatif de l'orientation que peut prendre le monument mortuaire.

Sur la figure 1, on a illustré un monument mortuaire 2 selon l'invention, spécifique en ce qu'il comporte au moins une borne de présentation, de recueil et d'échange d'informations 4.

Dans ce qui suit, il va être décrit plus précisément, et en référence aux figures, un monument funéraire configuré pour recevoir une borne de présentation d'informations 4, le monument mortuaire 2 tel qu'illustré sur la figure 1 comportant un soubassement 6, agencé autour d'une fosse, une tombale 16 disposée au contact du soubassement en recouvrement de la fosse, et dans le cas illustré, sans que cela soit limitatif, une stèle 8 disposée à une première extrémité longitudinale 10 du soubassement 6.

Il convient de noter que l'invention vise à couvrir un monument mortuaire, que celui-ci soit un monument funéraire ou un monument cinéraire, qui comporte une borne de présentation, de recueil et d'échange d'informations rendue solidaire d'une tombale du monument. Dans le cas d'application particulière à un monument cinéraire, on comprendra que le monument peut ne pas comporter de soubassement, la tombale pouvant reposer directement sur le sol pour recouvrir une cavité dans laquelle sont disposées les cendres de l'être défunt. A la suite de la description à venir, il sera fait mention de ce que peut impliquer cette différence structurelle, étant entendu que selon l'invention, la coopération d'une borne et d'une tombale présente les mêmes intérêts et avantages dans le cas d'un monument cinéraire que d'un monument mortuaire.

La stèle 8 s'étend sensiblement perpendiculairement au soubassement 6, de manière à servir de support à des inscriptions relatives à l'identification du défunt. L'épaisseur de la stèle 8 est mesurée selon la direction longitudinale et sa hauteur est mesurée selon la direction verticale perpendiculaire au sol dans lequel est creusée la fosse.

La présence d'une stèle dans le monument mortuaire selon l'invention n'est nullement limitative de l'invention, dans le sens où des monuments mortuaires, qu'ils soient funéraires ou cinéraires, peuvent ne pas comporter de stèles et consister uniquement en une plaque formant la tombale, que cette plaque soit en recouvrement d'un soubassement ou non.

Dans l'exemple illustré sur les figures d'un monument funéraire sur lequel la tombale 16 repose en périphérie sur un soubassement 6, ce soubassement 6 présente la forme d'un cadre rectangulaire entourant la fosse et présentant une face inférieure 12 tournée vers le sol et une face supérieure 14 opposée.

Selon l'invention, le monument comporte une tombale 16 qui vient recouvrir la fosse, et qui dans l'exemple vient reposer sur le soubassement 6, de manière à former un cache, par exemple en granite.

La tombale 16 présente une face inférieure 18, ménagée en regard du soubassement 6 et venant au contact de celui-ci sur le pourtour périphérique de la tombale, et une face supérieure 20 tournée à l'opposé de la fosse et du soubassement 6, ladite face supérieure 20 de la tombale 16 étant de la sorte la partie visible par les personnes venant se recueillir sur le monument funéraire ou cinéraire du défunt.

Selon un premier mode de réalisation de l'invention, la borne de présentation, de recueil et d'échange d'informations est encastrée dans la tombale 16 et un logement 22 est ménagé dans le monument funéraire pour recevoir la borne de présentation, de recueil et d'échange d'informations 4 tel que précédemment évoqué. Sur la figure 1, il est rendu visible une lumière 24 dans la tombale 16 formant un dégagement de matière de dimensions appropriées pour recevoir la borne de présentation, de recueil et d'échange d'informations 4 et former ainsi le logement 22.

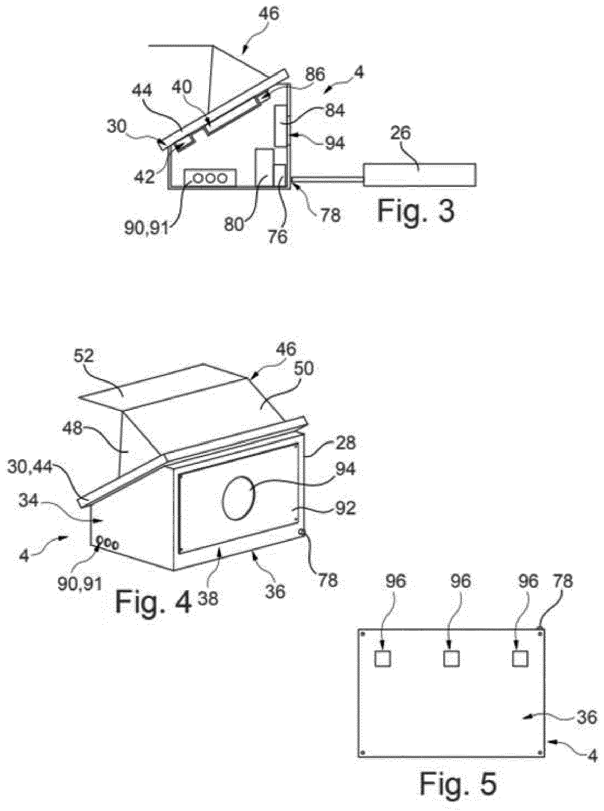

Par ailleurs, le monument mortuaire 2 comporte au moins un panneau solaire 26 pour la recharge électrique de composants disposés dans la borne de présentation, de recueil et d'échange d'informations 4. Dans l'exemple illustré sur la figure 1, le monument mortuaire comporte deux panneaux solaires 26 agencés chacun à plat sur la face supérieure 20 de la tombale 16, au voisinage d'une extrémité de la tombale 16, ici l'extrémité à l'opposé de la stèle 8 et l'extrémité amenée à être au plus près des individus s'inclinant sur la tombale, et de part et d'autre de la borne de présentation, de recueil et d'échange d'informations 4. Un tel agencement est avantageux en ce qu'il permet d'une part, lorsque le monument mortuaire comporte une stèle, une position éloignée de la stèle des panneaux solaires, qui de la sorte ne sont pas ou peu impactés par l'ombre portée par la stèle 8, ce qui fait que les performances de récupération d'énergie solaire sont optimisées, et d'autre part une position avancée de la borne de présentation, de recueil et d'échanges d'informations facilitant l'enregistrement visuel, sonore de messages et la manipulation de la borne par les utilisateurs. Par ailleurs, cela permet une position du ou des panneaux solaires 26 au voisinage de la borne de présentation, de recueil et d'échange d'informations 4, facilitant la mise en œuvre de moyens de connexion, par des câbles électriques par exemple visibles sur la figure 3, pour le raccordement électrique des composants présents dans la borne de présentation d'informations 4 au panneau solaire 26.

Le panneau solaire 26 peut être fixé sur la tombale 16 via un cadre de protection du panneau solaire 26, par exemple réalisé en acier inoxydable, et destiné à être fixé sur la tombale 16. Sans sortir du contexte de l'invention, le panneau solaire 26 pourrait prendre une autre position et un autre angle que l'horizontalité par rapport à la tombale.

La borne de présentation, de recueil et d'échange d'informations 4 comporte un boîtier 28 dans lequel est ménagée une pluralité de composants permettant à la fois de recueillir des informations et de les présenter. Dans le premier mode de réalisation illustré sur les figures 1 et 2 par exemple, la borne est configurée pour être disposée dans le logement 22, et pour s'étendre au moins en partie dans le dégagement de matière réalisé dans la tombale 16. Dans le deuxième mode de réalisation illustré sur les figures 7 et 7bis, la borne est configurée pour reposer contre la face supérieure 20 de la tombale 16, sans qu'aucun logement ne soit prévu dans l'épaisseur de celle-ci.

Le boîtier 28 peut être réalisé en acier inoxydable et être découpé au laser.

Dans l'exemple illustré, le boîtier 28 présente une face frontale 30, orientée vers la deuxième extrémité longitudinale 32 de la tombale 16, c'est-à-dire à l'opposé de la stèle 8 lorsque le monument mortuaire comporte une stèle, deux parois latérales 34, une paroi de fond 36 non visible sur la figure 1 car escamotée dans ce cas dans le logement 22 et par l'intermédiaire de laquelle la borne est fixée sur le monument mortuaire 2, ainsi qu'une face arrière 38 non visible sur la figure 1 car tournée vers la stèle 8.

Tel que cela est visible sur la figure 1, la borne de présentation, de recueil et d'échange d'informations formant partie du dispositif mortuaire selon l'invention comporte une interface de communication 40 comportant au moins un écran et qui est ménagée dans la face frontale 30.

Plus particulièrement la face frontale 30 du boîtier 28 de la borne de présentation, de recueil et d'échange d'informations peut être configurée pour loger l'une en dessous de l'autre l'interface de communication 40 formant écran et une enceinte 42 formant microphone et haut-parleur.

L'interface de communication 40 est avantageusement une interface tactile, qui permet de gérer aussi bien la demande de présentation d'informations émanant de la personne venant se recueillir que la collecte d'informations émises par une personne souhaitant laisser une trace de son recueillement. L'interface de communication 40 peut notamment présenter la forme d'une tablette tactile 40 indépendante et rapportée sur le boîtier 28 de la borne interactive.

Il peut notamment être prévu d'équiper la borne de présentation d'informations 4 avec une tablette tactile 40 de 10 pouces comportant sur sa surface un verre trempé tactile de protection, notamment contre les rayures et les chocs, ledit verre protégeant également les bords supérieurs de la tablette. La tablette est fixée par l'intérieur de la borne sur la face frontale 30 du boîtier 28. Un dispositif de protection contre l'humidité et la poussière est prévu sur l'arrière et sur les côtés de la tablette tactile. Bien entendu, des tablettes de taille inférieure ou supérieure peuvent être utilisées dès lors que la face frontale 30 est configurée en conséquence.

L'interface de communication 40 est avantageusement munie d'au moins une application configurée pour réaliser plusieurs fonctionnalités qui seront décrites en détail ci-après.

L'enceinte 42 formant haut-parleur et microphone intégrés est avantageusement une enceinte 42 à communication sans fil de type Bluetooth, l'enceinte 42 étant fixée par l'intérieur de la borne sur la face frontale 30 du boîtier 28. Selon une variante de réalisation, on pourra prévoir que le haut-parleur et le microphone soient séparés. Par ailleurs, il peut être prévu une enceinte étanche 42 permettant l'utilisation de la borne de présentation, de recueil et d'échange d'informations par tout temps.

Une plaque d'habillage 44 est ici placée sur la face frontale 30 du boîtier 28, cette plaque d'habillage 44 comportant les mêmes orifices destinés au passage de l'interface de communication 40 formant écran de support d'informations et l'enceinte 42 formant microphone et haut-parleur. La plaque d'habillage 44 peut par exemple être réalisée en pierre naturelle, en verre spécial, ou en matériau de synthèse imitant la pierre naturelle selon les modes de réalisation.

Toujours sur la figure 1, un dispositif de protection des intempéries 46 est fixé sur cette plaque d'habillage 44 et est configuré de manière à protéger notamment la tablette. Le dispositif de protection des intempéries 46 présente globalement la forme d'une visière, par exemple en polymère thermoplastique teinté de type polyméthacrylate de méthyle (PMMA), avec deux montants latéraux 48, qui sont agencés transversalement de chaque côté de l'interface tactile, et une partie d'obturation centrale 50, comportant une paroi principale, sensiblement perpendiculaire au plan de la face frontale 30 du boîtier 28 de la borne, et un rabat 52 prolongeant la paroi principale pour venir en recouvrement de l'interface. Le dispositif de protection des intempéries 46 peut être fixe ou bien être agencé de sorte que le rabat 52 puisse prendre plusieurs positions par l'intermédiaire d'une articulation appropriée. Dans ce dernier cas, l'utilisateur peut modifier la position du rabat pour améliorer la visibilité de l'interface de communication 40.

Le dispositif de protection des intempéries 46 peut être escamoté lorsque les conditions météorologiques ne présentent pas de risque de dégradation de l'interface tactile et qu'elles permettent une bonne visibilité de l'écran.

Dans le but de limiter au maximum le reflet des rayons du soleil et permettre une visibilité de l'écran pour une personne venant se recueillir et se positionnant devant le monument funéraire, la face frontale 30 peut s'étendre avantageusement dans un plan présentant une inclinaison, par rapport au plan dans lequel s'inscrit principalement la face supérieure 20 de la tombale 16, d'angle compris entre 10° et 80°. Bien entendu, on comprend que, en fonction du type de monument funéraire et par exemple en fonction de la hauteur à laquelle s'étend la borne de présentation, de recueil et d'échange d'informations, cette dernière peut être configurée, sans sortir du contexte de l'invention, de sorte que l'écran est strictement vertical ou horizontal, c'est-à-dire strictement perpendiculaire ou à plat par rapport à la tombale.

Sur la figure 2, on a illustré plus en détails un premier mode de réalisation du logement 22 de réception de la borne interactive et des moyens de fixation appropriés de la borne sur le monument mortuaire 2 dans ce logement 22.

Le logement 22 est ici réalisé par un dégagement de matière réalisé dans la tombale 16 verticalement depuis la face inférieure 18 de la tombale 16 jusqu'à la face supérieure 20 de cette tombale, de manière à former la lumière 24 traversante précédemment évoquée.

Un support de fixation 62 est prévu pour permettre la solidarisation de la borne de présentation, de recueil et d'échange d'informations 4 dans le monument mortuaire 2, et plus particulièrement dans le mode de réalisation illustré sur les figures 2 et 2bis, la fixation de la borne sur la face inférieure 18 de la tombale 16, à savoir la face en regard de la fosse et le cas échéant du soubassement 6. On comprendra que différents modes de fixation de la borne de présentation, de recueil et d'échange d'informations 4 pourront être prévus, en notant que les modes de fixation décrits plus en détails ci-après permettent de limiter les cas de vol de la borne, le support de fixation 62 étant ici configuré pour coopérer avec la borne interactive à l'intérieur du logement 22 sous la tombale 16, de sorte que l'accès aux moyens de fixation soit rendu difficile et évite le vol de la borne.

Le support de fixation 62 est configuré pour d'une part coopérer avec la paroi de fond 36 de la borne interactive et d'autre part être ménagé sous la tombale 16, en prise sur la face inférieure 18.

Plus précisément, le support de fixation 62 présente la forme d'une équerre avec une première branche 64 qui est disposée contre la face inférieure 18 de la tombale 16 pour en être rendue solidaire, par vissage ou par toute autre opération permettant sa fixation, et avec une deuxième branche 66 qui est solidaire du boîtier 28 de la borne de présentation, de recueil et d'échanges d'informations 4 par l'intermédiaire de moyens de fixation irréversibles ou bien par l'intermédiaire d'un moyen de fixation non accessible depuis l'intérieur du boîtier 28. A titre d'exemple, la deuxième branche 66 peut être soudée sur le boîtier 28, ou bien elle peut être boulonnée par l'intermédiaire d'un écrou qui s'étend à l'extérieur de la borne et donc sous la tombale 16 lorsque la borne est en place dans le logement 22. Dans ces différents exemples de réalisation, on comprend que la borne de présentation, de recueil et d'échange d'informations est rendue solidaire de la tombale 16 avant que celle-ci ne soit rapportée sur le soubassement 6, de sorte que les moyens de fixation sont facilement accessibles avant la mise en place du monument mortuaire 2 mais ne sont plus accessibles après cette mise en place.

Dans l'exemple illustré sur la figure 2, et tel que cela est plus particulièrement visible sur la figure 2bis illustrant un détail de la figure 2, afin de permettre la mise en œuvre d'un mode de fixation rendant difficile le vol de la borne, le support de fixation 62 présente une forme générale en marche d'escalier, avec la deuxième branche 66 qui est prolongée par une platine 70 sur laquelle vient reposer la paroi de fond 36 du boîtier 28 de la borne et qui s'étend perpendiculairement à la deuxième branche 66 à l'opposé de la première branche 64, en étant sensiblement parallèle à cette première branche 64. La platine 70 sert de support à la borne et elle peut être perforée par un trou laissant passage à une vis de fixation 72 dont la tête de vis 74 vient en butée contre la paroi de fond 36 à l'intérieur du boîtier 28 de la borne et dont la tige coopère avec un écrou 68 qui est rapporté sur l'extérieur de la borne contre cette platine 70 tel que cela est visible sur la figure 2.

Une variante de ce premier mode de réalisation est illustrée sur la figure 8. Comme précédemment, un support de fixation 62 est prévu pour permettre la solidarisation de la borne de présentation, de recueil et d'échange d'informations 4 dans le monument mortuaire 2, et plus particulièrement la fixation de la borne sur la face inférieure 18 de la tombale 16. Dans cette variante, le support est soudé sur une paroi latérale 34 de la borne et présente une forme d'équerre avec une base disposée contre la paroi latérale et au moins une branche prolongeant perpendiculairement cette base pour venir contre une face de la tombale. Dans l'exemple illustré sur la figure 8, le support de fixation 62 présente une forme en U et comprend deux branches en parallèles qui viennent enserrer la tombale, une première branche étant disposée en regard de la face supérieure 20 de la tombale et l'autre branche venant en regard de la face inférieure 18 de la tombale. On comprend dans ce cas que la base et une première branche forme un ensemble monobloc soudé sur la paroi latérale, et que l'autre branche est rapportée boulonnée après que la première branche ait été fixée sur la tombale. Des moyens de vissage peuvent être prévus pour rendre solidaires ces branches, et donc la borne de présentation, de recueil et d'échange d'informations, de la tombale 16.

La figure 3 illustre à la fois l'intérieur du boîtier 28 de la borne de présentation d'informations 4, rendant visible plusieurs des composants équipant cette borne, et la connexion électrique de cette borne avec le panneau solaire 26 représenté ici schématiquement et tel qu'il a pu être illustré notamment sur la figure 1.

Les différents composants équipant la borne interactive consistent notamment en des appareils de régulation du courant amené dans la borne par l'intermédiaire du panneau solaire 26, des batteries configurées pour alimenter les composants électriques et pour être rechargées le cas échéant via les appareils de régulation, un adaptateur 75 configuré pour traiter le courant, des appareils de mesure et de traitement thermique pour moduler la température interne à la borne, des moyens de communication avec ou sans fil, ainsi que l'interface de communication 40 et l'enceinte 42 formant microphone et haut-parleur précédemment évoquées et fixées sur la face frontale 30.

Les appareils de régulation comportent notamment un régulateur de charge 76 fonctionnant dans l'exemple illustré en 12V et rendu solidaire d'une face interne du boîtier 28 de la borne, et avantageusement à proximité d'un passage de câble par lequel les câbles de raccordement du panneau solaire 26 pénètrent dans la borne. Les câbles de raccordement circulent depuis le panneau solaire jusqu'à la borne à l'intérieur d'un cache-câbles ayant tout à la fois une fonction esthétique et une fonction de protection des câbles.

Le régulateur de charge 76 vise à réguler charge et décharge des batteries 80 et il peut être prévu de piloter la charge et la décharge des batteries 80 successivement les unes aux autres ou simultanément.

Ces batteries 80, ici des batteries de 12 volts, sont prévues pour l'alimentation des différents composants parmi lesquels l'interface de communication 40 et le microphone haut-parleur. Ces batteries 80 sont agencées au voisinage de la face arrière 38 du boîtier 28 pour être au plus près du régulateur de charge 76 et du passage de câbles 78, afin de limiter le métrage des câbles circulant à l'intérieur de la borne.

Les appareils de mesure et de traitement thermique comprennent au moins un thermostat 81 de mesure de la température ambiante et de coupure de l'alimentation électrique de l'interface de communication, du microphone haut-parleur et des ports USB lorsque ladite température descend en dessous d'un seuil déterminé, par exemple 3°.

Les appareils de mesure et de traitement thermique peuvent comprendre au moins un thermostat 88, distinct ici du thermostat précédemment décrit, participant à détecter le besoin d'une montée en température de l'interface de communication 40, et au moins un ou plusieurs coussinets chauffants 86, destinés à permettre le réchauffement ponctuel de l'interface de communication 40 avant sa mise en fonctionnement par exemple. Avantageusement, le ou les coussinets chauffants 86 sont plaqués contre la face arrière de l'interface de communication 40.

Les appareils de mesure et de traitement thermique peuvent comprendre au moins un thermostat 82 et au moins un ventilateur 84 aptes à mesurer la température intérieure de la borne et assurer le cas échéant le refroidissement des composants électriques ou électroniques lors de leur fonctionnement.

Le ventilateur 84 est avantageusement agencé contre la face arrière 38 de la borne, à l'opposé de la face frontale 30 comportant l'interface de communication 40.

Les moyens de communication peuvent consister en un moyen de communication sans fil, par exemple de type Bluetooth, ou en un moyen de communication filaire.

Dans l'exemple illustré, les moyens de communication comportent une caméra 41 permettant l'acquisition d'images qui est celle de la tablette, et un microphone HP formant enceinte 42 qui est de type Bluetooth. Un port de communication 90 étanche USB et/ou micro-USB est présent sur une paroi latérale afin de permettre un chargement filaire d'informations sur l'interface de communication 40. Dans l'exemple illustré, deux autres ports étanches sont prévus pour permettre par exemple la recharge électrique éventuelle d'appareils portables des visiteurs ou un usage par un technicien de maintenance sur site.

Il convient de noter que l'agencement des composants à l'intérieur de la borne pourrait être différent sans sortir du contexte de l'invention.

Ces différents composants sont disposés contre une ou plusieurs face internes du boîtier 28, étant entendu que par ailleurs, un revêtement isolant thermique peut avantageusement être plaqué sur toutes les faces et parois à l'intérieur de la borne.

Tel qu'illustré sur la figure 4, la face arrière 38 du boîtier 28 de la borne, présente une ouverture que vient obturer une plaque de fermeture 92, ici vissée sur la face arrière 38 par quatre vis. La plaque de fermeture 92 comporte, ici sensiblement en son centre, un orifice d'entrée d'air 94 en travers duquel est agencé le ventilateur 84 précédemment décrit. On comprend que le démontage de cette face arrière 38 permet d'accéder aux composants logés à l'intérieur du boîtier 28 pour leur remplacement en cas de disfonctionnement, ainsi que le cas échéant aux moyens de fixation de la borne sur la tombale. Afin d'assurer une inviolabilité du dispositif, des moyens de verrouillage peuvent être prévus, comme par exemple une serrure à clé et le cas échéant des charnières.

Dans le premier mode de réalisation illustré notamment sur les figures 1 et 2, la partie démontable de la face arrière devra être uniquement disposée sur la partie haute, le bas de la borne étant partiellement encastré dans la lumière formant logement de la borne. En d'autres termes, la plaque de fermeture 92 s'étend à distance de l'arête commune à la face arrière 38 et la paroi de fond 36, et il est prévu que cette distance soit supérieure à l'épaisseur de la tombale 16 de sorte qu'il soit possible de manipuler la plaque de fermeture 92 alors que la borne est disposée dans le logement 22.

Il convient de noter que le passage de câbles 78 précédemment évoqué est également visible sur cette figure 4, sur un bord de la face arrière 38.

Tel qu'illustré sur la figure 5, la paroi de fond 36 est ménagée de manière à présenter trois orifices d'aération 96 protégés respectivement par des grilles de protection et qui sont disposées et dimensionnées pour compléter l'action du ventilateur 84 précédemment évoqué. Bien entendu, si la borne est agencée de sorte que la paroi de fond est occultée, les orifices d'aération seront disposés sur un emplacement dégagé, par exemple une paroi latérale.

Par ailleurs, cette figure 5 rend visible les trous de fixation ménagées dans la paroi de base pour permettre le passage des moyens de fixation, notamment des vis aptes à être boulonnées, à travers la paroi de fond 36 avant de coopérer avec les moyens de fixation solidaires de la tombale.

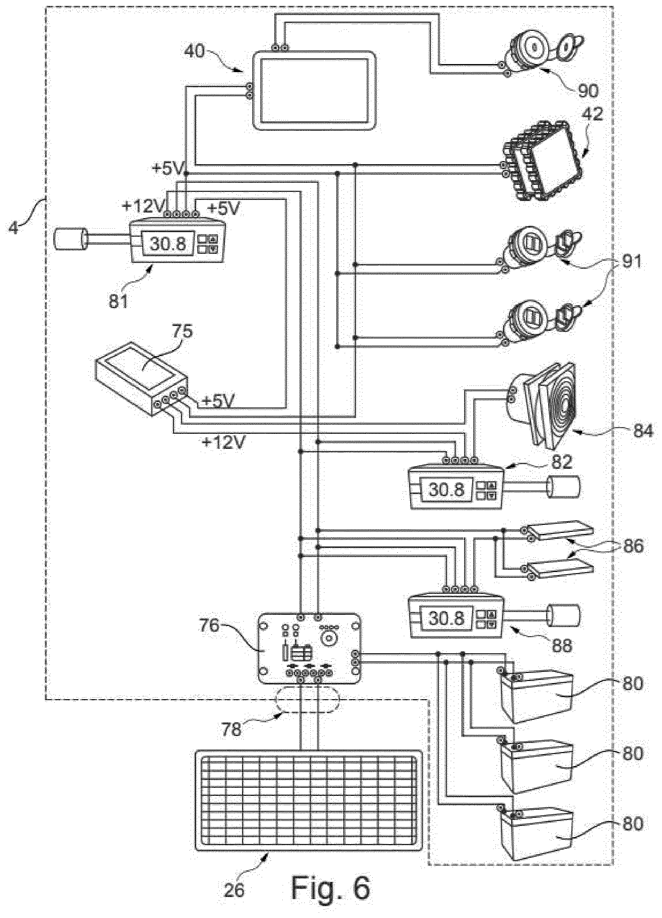

Il résulte de ce qui précède qu'une borne de présentation, de recueil et d'échange d'informations 4 configurée pour équiper un monument mortuaire 2 selon l'invention peut comporter, tel que cela est récapitulé sur la figure 6, les composants suivants.

L'interface tactile 40 et l'enceinte 42 formant haut-parleur et microphone sont alimentés en courant via l'adaptateur et elles sont alimentées en informations par des moyens filaires ou non tel que précédemment évoqué.

L'adaptateur est disposé entre le régulateur de charge 76 et l'interface de communication 40, ici la tablette tactile 40 et l'enceinte 42.

Le régulateur de charge 76 est configuré pour gérer la charge et la décharge de batteries 80 de 12 volts, de sorte que ces batteries 80 puissent alimenter la tablette tactile 40, l'enceinte 42 étanche, les dispositifs de mesure et de traitement thermique et de sorte que l'énergie solaire puisse permettre la recharge des batteries 80 le cas échéant. Bien entendu, il peut être prévu une alimentation secteur du dispositif pour proposer une alimentation alternative à l'alimentation solaire.

Par ailleurs, le panneau solaire 26, par exemple d'une puissance énergétique de 50 watts, agencé à l'extérieur du boîtier 28 de la borne, est raccordé par câble électrique au régulateur dans le boîtier 28, un guide-câble étant fixé sur la partie arrière basse du boîtier 28. Bien entendu, des panneaux solaires plus petits ou plus grands, et en nombre différent, peuvent être utilisés.

Nous allons maintenant décrire les différentes fonctionnalités envisagées de manière non limitative pour leur mise en œuvre sur la borne de présentation, de recueil et d'échange d'informations associée au monument mortuaire 2 selon l'invention.

Il convient d'abord, à partir d'un navigateur, d'une clé USB ou MICRO USB, ou d'une carte mémoire, d'installer l'application propriétaire dans la tablette implantée dans la borne de présentation d'informations 4, puis de passer en mode kiosque afin que la tablette de la borne funéraire reste confinée à l'application propriétaire. Il est intéressant que l'application ne nécessite pas forcément l'accès à internet une fois installée, du fait de la possible implantation du monument mortuaire 2 correspondant dans des zones rurales à l'accès internet limité ou inexistant. Toutefois, sans sortir du contexte de l'invention, la borne de présentation, de recueil et d'échanges d'informations peut être prévue dans une version connectée.

La tablette peut être chargée avec des applications annexes permettant notamment de lire des fichiers de plusieurs types, et avantageusement des fichiers vidéo et/ou photo.

La mise en fonction de la tablette de la borne, précédemment en veille, se fait par simple contact tactile avec l'écran. A chaque mise en fonction, un message de bienvenue sera indiqué pour inciter l'utilisateur à confirmer l'intention de mettre en fonction la tablette, par exemple en rentrant un code d'accès qui pourra différer selon que l'utilisateur soit un proche de l'être défunt, personne ou animal de compagnie comme décrit précédemment, un inconnu venu se recueillir, ou un administrateur/réparateur du système, et qui pourra générer des actions ou des informations présentées différentes.

A titre de premier exemple non limitatif, un menu relatif à la présentation de l'être défunt pourra permettre :
- à l'administrateur, ou à un proche désigné pour ce faire, de charger dans l'interface tactile 40 de la borne funéraire, grâce aux moyens de communication avec ou sans fil, une biographie de l'être défunt dans la tablette de la borne, le support pouvant être un fichier de texte, un fichier vidéo, ou encore un fichier photo, créé pour la circonstance ou déjà existant ; et le cas échéant à l'administrateur, ou au proche désigne pour ce faire, de remplacer un tel fichier par un autre ;
- aux proches de l'être défunt, ou encore au maître et/ou à la maîtresse dans le cas d'un animal de compagnie, ainsi qu'aux autres visiteurs, de visionner cette biographie en entrant dans leurs menus respectifs.

A titre de deuxième exemple non limitatif, un menu « rendre un hommage à l'être défunt » pourra permettre aux proches de l'être défunt, ou au maître et à la maîtresse dans le cas d'un animal de compagnie, ainsi qu'aux autres visiteurs, venus se recueillir sur le monument funéraire ou cinéraire, d'enregistrer un hommage audiovisuel à ce dernier, grâce à la caméra 41 avant de l'interface tactile 40 et au microphone agencés sur la face frontale 30 du boîtier de la borne, orientés face aux visiteurs.

Les hommages successifs rendus par différentes personnes sont stockés dans le logiciel par ordre chronologique d'enregistrement.

A titre de troisième exemple non limitatif, un menu « visionner des hommages rendus » à l'être défunt pourra permettre aux proches de l'être défunt, ou au maître et à la maîtresse dans le cas d'un animal de compagnie, ainsi qu'aux autres visiteurs, venus se recueillir sur le monument funéraire ou cinéraire sur lequel est implanté la borne funéraire, de visionner des hommages audiovisuels laissés par d'autres personnes venues également s'incliner sur ledit monument. Il est possible de passer des hommages sans les visionner pour se rendre plus rapidement à d'autres. A contrario, on peut remonter vers des hommages plus anciens

Tel que cela a été précisé précédemment, un code d'accès peut être demandé au lancement de l'application pour distinguer les proches de l'être défunt, ou le maître ou la maîtresse dans le cas d'un animal de compagnie, des autres visiteurs. Les proches ont alors des possibilités d'interaction avec la borne qui ne sont pas offertes aux autres visiteurs, et par exemple la possibilité de charger eux-mêmes dans l'interface tactile 40 de la borne, grâce par exemple à une carte mémoire appropriée, des moments de vie partagés avec l'être défunt du temps de son vivant, le support pouvant être un fichier image, un fichier vidéo, ou un fichier photo, ainsi que la possibilité de visionner ces moments de vie.

On comprend que d'autres fonctionnalités pourront également être chargées dans la tablette par l'administrateur afin de les rendre accessibles aux proches de l'être défunt et le cas échéant aux autres visiteurs, ainsi par exemple un support d'information sur l'environnement du site funéraire ou cinéraire, et/ou sur des services de proximité disponibles tels la commande de fleurs ou couronnes, le nettoyage de la tombe, etc.

La figure 7 et le détail de la figure 7bis illustrent un deuxième mode de réalisation de l'invention, qui diffère de ce qui précède dans les moyens de fixation mis en œuvre et dans la disposition qui en résulte de la borne de présentation, de recueil et d'échange d'informations fixée sur la tombale.

Dans ce deuxième mode de réalisation, la borne de présentation, de recueil et d'échange d'informations 4 est fixée directement sur la face supérieure 20 de la tombale 16, sans qu'un logement ne soit spécifiquement aménagé dans l'épaisseur de la tombale. La paroi de fond 36 vient reposer contre la face supérieure 20 de la tombale 16. La borne est boulonnée sur la tombale, par l'intermédiaire d'une pluralité de tiges filetées 73 dont la base respective est noyée dans l'épaisseur de la tombale 16. De la sorte, le montage de la borne s'effectue dans un premier temps en faisant pénétrer l'extrémité des tiges filetées 73 s'étendant en saillie de la tombale dans des orifices correspondants ménagées dans la paroi de fond 36. Dans un deuxième temps, l'opérateur, en passant la main par exemple par la face arrière 38 avec la plaque de fermeture 92 retirée, vient verrouiller la position de la borne par vissage d'un écrou 75 sur l'extrémité libre de la tige filetée.

S'il est notable que le premier mode de réalisation précédemment décrit avec une borne encastrée au moins partiellement permet d'assurer l'inviolabilité de la borne de présentation, de recueil et d'échange d'informations et de tous les composants électroniques qu'elle peut renfermer, il convient de noter que le deuxième mode de réalisation est plus simple à mettre en œuvre dans la mesure où le seul usinage nécessaire sur la tombale est l'opération de noyage partiel des tiges filetées dans l'épaisseur de la tombale, contrairement au premier mode de réalisation où un orifice traversant doit être réalisé à travers la tombale.

D'autres modes de réalisation alternatifs peuvent être prévus, comme par exemple un mode, ici non représenté, dans lequel la borne de présentation, de recueil et d'échange d'informations peut être encastré partiellement dans un logement ménagé dans l'épaisseur de la tombale, conformément au premier mode de réalisation, avec le logement cette fois non traversant et débouchant et qui présente un fond en saillie duquel sont noyés des tiges, conformément au deuxième mode de réalisation.

L'invention telle qu'elle vient d'être décrite atteint bien les buts qu'elle s'est fixés, en ce qu'elle permet, par des moyens simples, de réaliser un monument funéraire ou cinéraire configuré pour offrir aux proches du défunt un support interactif permettant de personnaliser, humaniser, autant que socialiser, le recueillement devant ledit monument.

L'invention telle qu'elle vient d'être décrite ne saurait toutefois se limiter aux moyens et configurations exclusivement décrits et illustrés, et s'applique également à tous moyens ou configurations conformément à les revendications ci-jointes.

A titre d'exemple non limitatif, et tel que cela a été évoqué précédemment, l'invention vise à couvrir également l'application d'une borne de présentation, de recueil et d'échange d'informations à un monument cinéraire dans lequel la tombale ne repose généralement sur aucun soubassement, contrairement à ce qui a pu être décrit et illustré dans le cas d'application à un monument funéraire. Dans ce cas de figure, et lorsque la borne est partiellement encastrée dans un logement ménagé dans la tombale, la paroi de fond de la borne est disposée dans le même plan que celui dans lequel s'étend la face inférieure de la tombale, et le support de fixation doit être configuré en conséquence, par exemple en prenant la forme d'une plaque plane, distincte de la forme en marche d'escalier décrite.

## Revendications

1. Monument mortuaire (2) comportant au moins une tombale (16) et une borne de présentation, de recueil et d'échange d'informations (4), ladite borne présentant une face frontale (30), dans laquelle est ménagée au moins une interface de communication (40), et une paroi de fond (36) ou une paroi latérale (34) par l'intermédiaire de laquelle elle est fixée sur le monument mortuaire (2), la borne comportant des moyens d'acquisition de données audiovisuelles configurés pour recueillir des informations et l'interface de communication comportant une application configurée pour stocker les informations recueillies et pour présenter sur requête ces informations via l'interface de communication, **caractérisé en ce que** l'application de l'interface de communication est configurée pour stocker les informations recueillies dans un ordre chronologique et pour les présenter via l'interface de communication (40) en fonction du résultat d'une requête d'identification enregistrée via l'interface de communication, ladite requête d'identification consistant en un code d'accès pouvant différer selon les catégories d'utilisateur et pouvant générer des actions ou des informations présentées différentes, l'interface de communication (40) étant une interface tactile et la face frontale (30) de la borne s'étendant dans un plan présentant une inclinaison, par rapport à l'horizontale, d'angle compris entre 10° et 80°,
ledit monument mortuaire comportant un dispositif de protection des intempéries (46), qui peut être escamoté lorsque les conditions météorologiques ne présentent pas de risque de dégradation de l'interface tactile et qu'elles permettent une bonne visibilité de l'écran formé par l'interface,
ledit monument comportant un port de communication (90) étanche USB et/ou micro-USB présent sur la paroi latérale (34) afin de permettre un chargement filaire d'informations sur l'interface de communication (40),
ledit monument mortuaire comportant au moins un panneau solaire (26) pour la recharge électrique de composants disposés dans la borne de présentation, de recueil et d'échange d'informations (4).

2. Monument mortuaire (2) selon la revendication 1, **caractérisé en ce que** les moyens d'acquisition de données audiovisuelles comportent une caméra permettant l'acquisition d'images et un microphone et un haut parleur formant enceinte, le microphone et le haut-parleur pouvant être séparés.

3. Monument mortuaire (2) selon la revendication précédente, **caractérisé en ce que** la caméra est une caméra avant de l'interface de communication.

4. Monument mortuaire (2) selon l'une des revendications précédentes, **caractérisé en ce qu'**un logement (22) est ménagé dans la tombale (16) pour la réception de la borne de présentation, de recueil et d'échange d'informations.

5. Monument mortuaire (2) selon la revendication 4, **caractérisé en ce qu'**une lumière (24) est ménagée traversante dans la tombale (16) pour former le logement (22), la borne de présentation, de recueil et d'échange d'informations (4) étant configurée pour traverser ladite lumière (24).

6. Monument mortuaire (2) selon l'une des revendications 4 ou 5, **caractérisé en ce qu'**il comporte un support de fixation (62) de la borne de présentation, de recueil et d'échange d'informations (4), ledit support de fixation (62) étant configuré pour coopérer avec la paroi de fond (36) ou la paroi latérale (34) de la borne de présentation, de recueil et d'échange d'informations (4) et avec une face inférieure (18) de la tombale (16).

7. Monument mortuaire (2) selon l'une des revendications 1 à 3, **caractérisé en ce que** la borne de présentation, de recueil et d'échange d'informations (4) est rendue solidaire de la tombale (16) de sorte que la paroi de fond (36) de la borne repose contre une face supérieure (20) de la tombale (16).

8. Monument mortuaire (2) selon l'une des revendications précédentes, **caractérisé en ce que** le au moins un panneau solaire (26) est agencé sur la face supérieure (20) de la tombale (16).

9. Monument mortuaire (2) selon l'une des revendications précédentes, **caractérisé en ce que** la borne de présentation, de recueil et d'échange d'informations (4) comprend au moins un thermostat (81) de coupure de la charge d'au moins l'interface de communication (40).

10. Monument mortuaire (2) selon l'une des revendications précédentes, **caractérisé en ce que** la borne de présentation, de recueil et d'échange d'informations comprend au moins un thermostat et au moins un dispositif de traitement thermique pour moduler la température interne à la borne, l'au moins un dispositif de traitement thermique consistant en un coussinet chauffant, plaqué contre l'interface de communication (40).

## Patentansprüche

1. Grabdenkmal (2), das mindestens einen Grabstein (16) und eine Säule zur Präsentation, zum Sammeln und zum Austausch von Informationen (4) umfasst, wobei die Säule eine Vorderseite (30), in der mindestens eine Kommunikationsschnittstelle (40) eingerichtet ist, und eine Bodenwand (36) oder eine Seitenwand (34), mit deren Hilfe sie an dem Grabdenkmal (2) befestigt ist, aufweist, wobei die Säule Mittel zum Erfassen von audiovisuellen Daten umfasst, die dazu konfiguriert sind, Informationen zu sammeln, und die Kommunikationsschnittstelle eine Anwendung umfasst, die dazu konfiguriert ist, die gesammelten Informationen zu speichern und diese Informationen im Fall einer Abfrage über die Kommunikationsschnittstelle zu präsentieren, wobei die Anwendung der Kommunikationsschnittstelle dazu konfiguriert ist, die gesammelten Informationen in einer chronologischen Reihenfolge zu speichern und sie in Abhängigkeit von dem Ergebnis einer Identifikationsabfrage, die über die Kommunikationsschnittstelle erfasst wird, über die Kommunikationsschnittstelle (40) zu präsentieren, wobei die Identifikationsabfrage aus einem Zugangscode besteht, der je nach den Benutzerkategorien unterschiedlich sein kann und der unterschiedliche Aktionen oder präsentierte Informationen generieren kann,
wobei die Kommunikationsschnittstelle (40) eine berührungsempfindliche Schnittstelle ist und sich die Vorderseite (30) der Säule in einer Ebene erstreckt, die in Bezug auf die Horizontale eine Neigung mit einem Winkel zwischen 10° und 80° aufweist,
wobei das Grabdenkmal eine Vorrichtung zum Schutz vor Witterungseinflüssen (46) umfasst, die versenkt werden kann, wenn die Wetterbedingungen keine Gefahr für eine Beeinträchtigung der berührungsempfindlichen Schnittstelle präsentieren und sie eine gute Sichtbarkeit des Bildschirms, der durch die Schnittstelle gebildet wird, ermöglichen, wobei das Denkmal einen an der Seitenwand (34) befindlichen dichten USB- und/oder Mikro-USB-Kommunikationsanschluss (90) umfasst, um ein drahtgebundenes Laden von Informationen auf die Kommunikationsschnittstelle (40) zu ermöglichen, wobei das Grabdenkmal mindestens ein Solarmodul (26) zum elektrischen Wiederaufladen von Komponenten, die in der Säule zur Präsentation, zum Sammeln und zum Austausch von Informationen (4) angeordnet sind, umfasst.

2. Grabdenkmal (2) nach Anspruch 1, **dadurch gekennzeichnet, dass** die Mittel zum Erfassen von audiovisuellen Daten eine Kamera, die das Erfassen von Bildern ermöglicht, und ein Mikrofon und einen Lautsprecher, die eine Box bilden, umfassen, wobei das Mikrofon und der Lautsprecher getrennt sein können.

3. Grabdenkmal (2) nach dem vorhergehenden Anspruch, **dadurch gekennzeichnet, dass** die Kamera eine Frontkamera der Kommunikationsschnittstelle ist.

4. Grabdenkmal (2) nach einem der vorhergehenden Ansprüche, **dadurch gekennzeichnet, dass** in dem Grabstein (16) eine Aufnahme (22) zur Unterbringung der Säule zur Präsentation, zum Sammeln und zum Austausch von Informationen eingerichtet ist.

5. Grabdenkmal (2) nach Anspruch 4, **dadurch gekennzeichnet, dass** eine durchgehende Öffnung (24) in dem Grabstein (16) eingerichtet ist, um die Aufnahme (22) zu bilden, wobei die Säule zur Präsentation, zum Sammeln und zum Austausch von Informationen (4) dazu konfiguriert ist, durch die Öffnung (24) hindurchzugehen.

6. Grabdenkmal (2) nach einem der Ansprüche 4 oder 5, **dadurch gekennzeichnet, dass** es einen Träger zur Befestigung (62) der Säule zur Präsentation, zum Sammeln und zum Austausch von Informationen (4) umfasst, wobei der Befestigungsträger (62) dazu konfiguriert ist, mit der Bodenwand (36) oder der Seitenwand (34) der Säule zur Präsentation, zum Sammeln und zum Austausch von Informationen (4) und mit einer Unterseite (18) des Grabsteins (16) zusammenzuwirken.

7. Grabdenkmal (2) nach einem der Ansprüche 1 bis 3, **dadurch gekennzeichnet, dass** die Säule zur Präsentation, zum Sammeln und zum Austausch von Informationen (4) mit dem Grabstein (16) fest verbunden ist, sodass die Bodenwand (36) der Säule an einer Oberseite (20) des Grabsteins (16) anliegt.

8. Grabdenkmal (2) nach einem der vorhergehenden Ansprüche, **dadurch gekennzeichnet, dass** das mindestens eine Solarmodul (26) auf der Oberseite (20) des Grabsteins (16) platziert ist.

9. Grabdenkmal (2) nach einem der vorhergehenden Ansprüche, **dadurch gekennzeichnet, dass** die Säule zur Präsentation, zum Sammeln und zum Austausch von Informationen (4) mindestens ein Thermostat (81) zum Trennen der Last mindestens der Kommunikationsschnittstelle (40) beinhaltet.

10. Grabdenkmal (2) nach einem der vorhergehenden Ansprüche, **dadurch gekennzeichnet, dass** die Säule zur Präsentation, zum Sammeln und zum Austausch von Informationen mindestens ein Thermostat und mindestens eine Wärmebehandlungsvorrichtung zum Anpassen der Innentemperatur der Säule beinhaltet, wobei die mindestens eine Wärmebehandlungsvorrichtung aus einem Wärmepad besteht, das an der Kommunikationsschnittstelle (40) anliegt.

## Claims

1. Funerary monument (2) comprising at least one tomb (16) and a terminal for presenting, collecting and exchanging information (4), said terminal having a front face (30), in which at least one communication interface (40) is arranged, and a bottom wall (36) or a side wall (34) by means of which it is attached to the funerary monument (2), the terminal comprising audiovisual data acquisition means that are configured to collect information and the communication interface comprising an application configured to store the collected information and to present this information on request via the communication interface, the application of the communication interface being configured to store the collected information in chronological order and to present it via the communication interface (40) according to the result of an identification request registered via the communication interface, said identification request consisting of an access code that may differ according to categories of user and may generate different presented information or actions,
the communication interface (40) being a touch interface and the front face (30) of the terminal extending in a plane having an inclination, with respect to the horizontal, with an angle of between 10° and 80°,
said funerary monument comprising a device for protection from bad weather (46), which may be retracted when weather conditions do not risk damaging the touch interface and they allow good visibility of the screen formed by the interface, said monument comprising a sealtight USB and/or micro-USB communication port (90) present on the side wall (34) in order to allow loading of information over the communication interface (40) by wire,
said funerary monument comprising at least one solar panel (26) for electrically charging components arranged in the terminal for presenting, collecting and exchanging information (4).

2. Funerary monument (2) according to Claim 1, **characterized in that** the audiovisual data acquisition means comprise a camera allowing the acquisition of images, a microphone and a loudspeaker enclosure, the microphone and the loudspeaker potentially being separate.

3. Funerary monument (2) according to the preceding claim, **characterized in that** the camera is a front camera of the communication interface.

4. Funerary monument (2) according to one of the preceding claims, **characterized in that** a housing (22) is arranged in the tomb (16) for accommodating the terminal for presenting, collecting and exchanging information.

5. Funerary monument (2) according to Claim 4, **characterized in that** an opening (24) is arranged through the tomb (16) to form the housing (22), the terminal for presenting, collecting and exchanging information (4) being configured to pass through said opening (24).

6. Funerary monument (2) according to one of Claims 4 and 5, **characterized in that** it comprises a support (62) for the attachment of the terminal for presenting, collecting and exchanging information (4), said attachment support (62) being configured to cooperate with the bottom wall (36) or the side wall (34) of the terminal for presenting, collecting and exchanging information (4) and with a lower face (18) of the tomb (16) .

7. Funerary monument (2) according to one of Claims 1 to 3, **characterized in that** the terminal for presenting, collecting and exchanging information (4) is secured to the tomb (16) such that the bottom wall (36) of the terminal rests against an upper face (20) of the tomb (16) .

8. Funerary monument (2) according to one of the preceding claims, **characterized in that** the at least one solar panel (26) is arranged on the upper face (20) of the tomb (16).

9. Funerary monument (2) according to one of the preceding claims, **characterized in that** the terminal for presenting, collecting and exchanging information (4) comprises at least one thermostat (81) for interrupting the charging of at least the communication interface (40) .

10. Funerary monument (2) according to one of the preceding claims, **characterized in that** the terminal for presenting, collecting and exchanging information comprises at least one thermostat and at least one heat treatment device for modulating the temperature inside the terminal, the at least one heat treatment device consisting of a heating pad, pressed against the communication interface (40).
